# EUROPEAN PATENT SPECIFICATION

(11) **EP 3 456 127 B1**
(45) Date of publication and mention of the grant of the patent: **27.04.2022**
(21) Application number: 17727713.4
(22) Date of filing: 12.05.2017
(51) Int. Cl.: H04W 72/04

(54) **SIGNALING OF TDD SUBFRAME USE TO SHORT TTI UES**
SIGNALISIERUNG EINER TDD-SUBFRAMEVERWENDUNG AN SHORT-TTI-BENUTZERGERÄTE
SIGNALISATION DE L'UTILISATION DE SOUS-TRAMES TDD À DES EU À COURT TTI

(30) Priority: 13.05.2016 US 201662336058 P
(43) Date of publication of application: 20.03.2019
(73) Proprietor: Telefonaktiebolaget LM Ericsson (PUBL), 164 83 Stockholm (SE)
(72) Inventor: LI, Jingya, 417 58 Göteborg (SE); SAHLIN, Henrik, 435 41 Mölnlycke (SE); ANDERSSON, Mattias, 172 39 Sundbyberg (SE); WIKSTRÖM, Gustav, 187 30 Täby (SE); ANDGART, Niklas, 247 33 Södra Sandby (SE)
(74) Representative: Ericsson
(86) International application number: PCT/IB2017/052817
(87) International publication number: WO 2017/195171

(56) References cited:
- WO-A1-2016/064544
- US-A1- 2016 020 891
- US-A1- 2016 088 652

## Description

### Technical Field

The disclosed subject matter relates generally to telecommunications and more particularly to techniques and technologies for signaling of Time Division Duplexing (TDD) subframe use to short Transmit Time Interval (TTI) User Equipment devices (UEs).

### Background

According to Technical Specification (TS) 36.211 Version 13.0.0 of the Third Generation Partnership Project (3GPP), three radio frame structures are supported. Frame structure type 1 (FS 1) is applicable to Frequency Division Duplexing (FDD) only, frame structure type 2 (FS 2) is applicable to Time Division Duplexing (TDD) only, and frame structure type 3 (FS 3) is applicable to License Assisted Access (LAA) secondary cell operation only.

With FS 2 for TDD, each radio frame of length 10 milliseconds (ms) comprises two half-frames of length 5 ms each. Each half-frame comprises five subframes (SFs) of length 1 ms. Each SF is defined by two slots of length 0.5 ms each. Within each radio frame, a subset of SFs are reserved for uplink (UL) transmissions, and the remaining SFs are allocated for downlink (DL) transmissions, or for special SFs, where the switch between DL and UL occurs.

As shown in Table 1, copied from 3GPP TS 36.211, version 13.0.0, seven different DL/UL configurations are supported for FS 2. Here, "D" denotes a DL SF, "U" denotes a UL SF, and "S" represents a special SF. Configurations 0, 1, 2, and 6 have 5 ms DL-to-UL switch-point periodicity, where the special SF occurs in both SF 1 and SF 6. Configurations 3, 4, and 5 have 10 ms DL-to-UL switch-point periodicity, with the special SF in SF 1 only.

**Table 1 DL/UL configurations**

| **DL/UL configuration** | **DL-to-UL Switch-point periodicity** | **SF number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

A special SF comprises three parts: a DL part (Downlink Pilot Time Slot (DwPTS)), Guard Period (GP), and a UL part (Uplink Pilot Time Slot (UpPTS)). The DwPTS with duration of more than three symbols can be treated as a normal DL SF for data transmission. However, the UpPTS is not used for data transmission due to the very short duration. Instead, UpPTS can be used for channel sounding or random access.

Typically, the **DL/UL** configuration and the configuration of the special SF used in a cell are signaled as part of the system information, which is included in System Information Block 1 (SIB1) and broadcasted every 80 ms within SF 5.

### Hybrid Automatic Repeat Request (HARQ) timing for TDD

HARQ timing is defined as the time relation between the reception of data in a certain HARQ process and the transmission of the HARQ Acknowledgement (ACK). Based on this timing, the receiver is able to know to which HARQ process a received ACK is associated.

In TDD, a UL HARQ ACK is only allowed to be transmitted in a UL SF, and a DL HARQ ACK is only possible in a Physical HARQ Indicator Channel (PHICH) of a DL SF and a DwPTS of a special SF. The HARQ ACK of a transport block in SF n is transmitted in SF n+k, where k ≥ 4. The value of k depends on the DL/UL configuration, and is given in Table 2 and Table 3 for DL and UL transmissions, respectively, as defined in 3GPP TS 36.213, version 13.0.1.

**Table 2 HARQ timing k for DL transmissions**

| **TDD DL/UL configuration** | **SF index n** | | | | | | | | | |
|---|---|---|---|---|---|---|---|---|---|---|
| | **0** | **1** | **2** | **3** | **4** | **5** | **6** | **7** | **8** | **9** |
| 0 | 4 | 6 | - | - | - | 4 | 6 | - | - | - |
| 1 | 7 | 6 | - | - | 4 | 7 | 6 | - | - | 4 |
| 2 | 7 | 6 | - | 4 | 8 | 7 | 6 | - | 4 | 8 |
| 3 | 4 | 11 | - | - | - | 7 | 6 | 6 | 5 | 5 |
| 4 | 12 | 11 | - | - | 8 | 7 | 7 | 6 | 5 | 4 |
| 5 | 12 | 11 | - | 9 | 8 | 7 | 6 | 5 | 4 | 13 |
| 6 | 7 | 7 | - | - | - | 7 | 7 | - | - | 5 |

**Table 3 HARQ timing k for UL transmissions**

| **TDD DL/UL configuration** | **SF index n** | | | | | | | | | |
|---|---|---|---|---|---|---|---|---|---|---|
| | **0** | **1** | **2** | **3** | **4** | **5** | **6** | **7** | **8** | **9** |
| 0 | - | - | 4 | 7 | 6 | - | - | 4 | 7 | 6 |
| 1 | - | - | 4 | 6 | - | - | - | 4 | 6 | - |
| 2 | - | - | 6 | - | - | - | - | 6 | - | - |
| 3 | - | - | 6 | 6 | 6 | - | - | - | - | - |
| 4 | - | - | 6 | 6 | - | - | - | - | - | - |
| 5 | - | - | 6 | - | - | - | - | - | - | - |
| 6 | - | - | 4 | 6 | 6 | - | - | 4 | 7 | - |

### UL scheduling timing and PHICH timing for TDD

The PHICH timing refers to the time relation between the reception of a Negative Acknowledgement (NACK) on PHICH in SF "n" and the retransmission of the previous transport block in SF *n+l.* UL scheduling timing refers to the time relation between a received UL grant in SF n and the uplink transmission in SF n+l. In TDD, the PHICH timing and the UL scheduling timing are identical. This is motivated by the possibility to override the PHICH by a dynamic UL scheduling grant sent on the Physical Uplink Control Channel (PUCCH) to support adaptive retransmissions.

The value of /depends on the DL/UL configuration, and is given in Table 4 (see 3GPP TS 36.213, version 13.0.1).

**Table 4: PHICH timing I for UL retransmissions**

| **TDD DL/UL contiguration** | **SF index n** | | | | | | | | | |
|---|---|---|---|---|---|---|---|---|---|---|
| | **0** | **1** | **2** | **3** | **4** | **5** | **6** | **7** | **8** | **9** |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

For DL/UL configuration 0, if the PHICH is received in subframe n=0 or 5 and it corresponds to the UL transmissions in SF 4 or SF 9, then the value of I is 7; otherwise, the value of I is given in Table 4.

### Latency reduction with short SFs

Packet data latency is one of the performance metrics that vendors, operators, and also end-users (via speed test applications) regularly measure. Latency measurements are done in all phases of a radio access network system lifetime when verifying a new software release or system component, when deploying a system, and when the system is in commercial operation.

Shorter latency than previous generations of 3GPP Radio Access Technologies (RATs) was one performance metric that guided the design of Long Term Evolution (LTE). LTE is also now recognized by the end-users to be a system that provides faster access to the Internet and lower data latencies than previous generations of mobile radio technologies.

Packet data latency is important not only for the perceived responsiveness of the system; it is also a parameter that indirectly influences the throughput of the system. Hypertext Transfer Protocol (HTTP) / Transmission Control Protocol (TCP) is the dominating application and transport layer protocol suite used on the Internet today. The typical size of HTTP based transactions over the Internet is in the range of a few tens of kilobytes (Kbyte) up to one Megabyte (Mbyte). In this size range, the TCP slow start period is a significant part of the total transport period of the packet stream. During TCP slow start, the performance is latency limited. Hence, improved latency can rather easily be showed to improve the average throughput for this type of TCP based data transactions.

Radio resource efficiency could be positively impacted by latency reductions. Lower packet data latency could increase the number of transmissions possible within a certain delay bound; hence, higher Block Error Rate (BLER) targets could be used for the data transmissions freeing up radio resources potentially improving the capacity of the system.

One area to address when it comes to packet latency reductions is the reduction of transport time of data and control signaling by addressing the length of a Transmit Time Interval (TTI). In LTE Release 8, a TTI corresponds to one SF of length 1 ms. One such 1 ms TTI is constructed by using 14 Orthogonal Frequency Division Multiplexing (OFDM) or Single Carrier Frequency Division Multiple Access (SC-FDMA) symbols in the case of normal cyclic prefix and 12 OFDM or SC-FDMA symbols in the case of extended cyclic prefix. In LTE Release 13, a goal is to specify transmissions with shorter TTIs that are much shorter than the LTE Release 8 TTI.

The short TTI (sTTI) can be decided to have any duration in time and comprises resources on a number of OFDM or SC-FDMA symbols within a 1 ms SF. As one example, the duration of the sTTI may be 0.5 ms, i.e. seven OFDM or SC-FDMA symbols for the case with normal cyclic prefix. Another example is an sTTI of only two OFDM or SC-FDMA symbols.

US 2016/020891 A1 describes radio frame configuration circuitry for use in a device of a wireless communication system. US 2016/088652 A1 describes a data structure for managing user equipment communications in a wireless communication system. WO 2016/064544 A1 describes methods, systems, and devices for wireless communication.

### Summary

The present invention is directed to a method of operation of a network node, a method of operation of a short Transmit Time Interval, sTTI, wireless device, a network node and an sTTI wireless device in accordance with the appended claims.

Systems and methods are disclosed that relate to signaling of Time Division Duplexing (TDD) subframe use to short Transmit Time Interval (sTTI) wireless devices. In some examples, a method of operation of a network node in a cellular communications network comprises signaling, to a wireless device, an indication of a TDD subframe set to use, where the TDD subframe set specifies subframe selection for legacy transmissions and sTTI, transmissions. In this manner, both sTTI transmissions can be made in selected legacy TDD subframes, which provide latency reduction in frame alignment and Hybrid Automatic Repeat Request (HARQ) Round Trip Time (RTT) for TDD.

In some examples, the TDD subframe set is one of a plurality of predefined TDD subframe sets defined for a TDD downlink (DL) / uplink (UL) configuration configured for a respective cell. Further, in some examples, the plurality of predefined TDD subframe sets specify sequences of subframes of a plurality of TDD subframe types, wherein the plurality of TDD subframe types comprise a DL subframe type, a UL subframe type, a special subframe type, and one or more additional subframe types defined for sTTI transmissions. Further, in some examples, each additional subframe type of the one or more additional subframe types has a fixed sTTI pattern defined for the additional subframe type, the fixed sTTI pattern comprising one or more DL sTTIs and one or more UL sTTIs. Further, in some examples, the fixed sTTI pattern defined for at least one of the one or more additional subframe types comprises a gap.

In some examples, the indication of the TDD subframe set to use is valid for a radio frame or longer. In some examples, the TDD subframe set to use replaces a previously configured TDD subframe set to use.

In some examples, signaling the indication of the TDD subframe set comprises signaling the indication of the TDD subframe set in a first subframe of a radio frame. In some other examples, signaling the indication of the TDD subframe set comprises signaling the indication of the TDD subframe set in an sTTI grant.

In some examples, the TDD subframe set corresponds to a unique sequence of sTTIs within a corresponding plurality of TDD subframes.

In some examples, the method further comprises determining the TDD subframe set to use based on at least one criteria from the group of: a ratio of legacy wireless devices and sTTI wireless devices and a ratio of DL and UL traffic of legacy wireless devices.

Examples of a network node for a cellular communications network are also disclosed. In some examples, a network node for a cellular communications network is adapted to perform the method of any of operation of a network node according to any one of the examples disclosed herein.

In some examples, a network node for a cellular communications network comprises a processor and memory comprising instructions executable by the processor whereby the network node is operable to signal, to a wireless device, an indication of a TDD subframe set to use, where the TDD subframe set specifies subframe selection for legacy transmissions and sTTI transmissions. In some examples, by execution of the instructions by the processor, the network node is further operable to perform the method of operation of a network node according to any one of the examples disclosed herein.

In some examples, a network node for a cellular communications network comprises a signaling module operable to signal, to a wireless device, an indication of a TDD subframe set to use, where the TDD subframe set specifies subframe selection for legacy transmissions and sTTI transmissions. In some examples, the network node further comprises one or more modules operable to perform the method of operation of a network node according to any one of the examples disclosed herein.

Examples of a computer program are also disclosed. In some examples, a computer program comprises instructions which, when executed on at least one processor, cause the at least one processor to carry out the method of operation of a network node according to any one of the examples disclosed herein. In some examples, a carrier containing the aforementioned computer program is provided, wherein the carrier is one of an electronic signal, an optical signal, a radio signal, or a computer readable storage medium.

Examples of a method of operation of a wireless device in a cellular communications network are also disclosed herein. In some examples, a method of operation of a wireless device in a cellular communications network comprises receiving, from a network node, an indication of a TDD subframe set to use, where the TDD subframe set specifies subframe selection for legacy transmissions and sTTI transmissions. The method further comprises determining at least one parameter comprising a search space for legacy grants, a search space for sTTI grants, sTTI UL transmission timing, and/or DL HARQ timing.

In some examples, the indication of the TDD subframe set to use is a TDD subframe set identifier, and determining the at least one parameter comprises combining the TDD subframe set identifier and a TDD DL/UL configuration identifier for a used TDD DL/UL configuration for a respective cell to thereby obtain a row index in a table of TDD subframe sets for the used TDD DL/UL configuration and setting the sTTI UL transmission timing and the DL HARQ timing based on the row index.

In some examples, the at least one parameter comprises a search space for legacy grants and a search space for sTTI grants. In some examples, the method further comprises monitoring the search space for legacy grants and the search space for sTTI grants.

In some examples, the at least one parameter comprises sTTI UL transmission timing. In some examples, the method further comprises performing an sTTI UL transmission in accordance with the sTTI UL transmission timing.

In some examples, the at least one parameter comprises DL HARQ timing. In some examples, the method further comprises performing a DL HARQ feedback transmission in accordance with the DL HARQ timing.

In some examples, the TDD subframe set is one of a plurality of predefined TDD subframe sets defined for a TDD DL/UL configuration configured for a respective cell. Further, in some examples, the plurality of predefined TDD subframe sets specify sequences of subframes of a plurality of TDD subframe types, the plurality of TDD subframe types comprising a DL subframe type, an UL subframe type, a special subframe type, and one or more additional subframe types defined for sTTI transmissions. Further, in some examples, each additional subframe type of the one or more additional subframe types has a fixed sTTI pattern defined for the additional subframe type, the fixed sTTI pattern comprising one or more DL sTTIs and one or more UL sTTIs. Further, in some examples, the fixed sTTI pattern defined for at least one of the one or more additional subframe types comprises a gap.

In some examples, the indication of the TDD subframe set to use is valid for a radio frame or longer. In some examples, the TDD subframe set to use replaces a previously configured TDD subframe set to use.

In some examples, receiving the indication of the TDD subframe set comprises receiving the indication of the TDD subframe set in a first subframe of a radio frame. In some other examples, receiving the indication of the TDD subframe set comprises receiving the indication of the TDD subframe set in an sTTI grant.

In some examples, the TDD subframe set corresponds to a unique sequence of sTTIs within a corresponding plurality of TDD subframes.

Examples of a wireless device for a cellular communications network are also disclosed. In some examples, a wireless device for a cellular communications network is adapted to perform the method of operation of a wireless device according to any one of the examples disclosed herein.

In some examples, a wireless device for a cellular communications network comprises a transceiver, a processor, and memory comprising instructions executable by the processor whereby the wireless device is operable to receive, from a network node, an indication of a TDD subframe set to use, where the TDD subframe set specifies subframe selection for legacy transmissions and sTTI transmissions, and determine at least one parameter comprising a search space for legacy grants, a search space for sTTI grants, sTTI uplink transmission timing, and/or DL HARQ timing. Further, in some examples, by execution of the instructions by the processor, the wireless device is further operable to perform the method of operation of a wireless device according to any one of the examples disclosed herein.

In some examples, a wireless device for a cellular communications network comprises a receiving module operable to receive, from a network node, an indication of a TDD subframe set to use, where the TDD subframe set specifies subframe selection for legacy transmissions and sTTI transmissions, and a determining module operable to determine at least one parameter comprising a search space for legacy grants, a search space for sTTI grants, sTTI UL transmission timing, and/or DL HARQ timing. Further, in some examples, the wireless device further comprises one or more modules operable to perform the method of operation of a wireless device according to any one of the examples disclosed herein.

Examples of a computer program are also disclosed. In some examples, a computer program comprises instructions which, when executed on at least one processor, cause the at least one processor to carry out the method of operation of a wireless device according to any one of the examples disclosed herein. In some examples, a carrier containing the aforementioned computer program is provided, wherein the carrier is one of an electronic signal, an optical signal, a radio signal, or a computer readable storage medium.

### Brief Description of the Drawings

The accompanying drawing figures incorporated in and forming a part of this specification illustrate several aspects of the disclosure, and together with the description serve to explain the principles of the disclosure. The drawings illustrate selected embodiments of the disclosed subject matter. In the drawings, like reference labels denote like features.
Figure 1 illustrates an example of a communications network in which embodiments of the present disclosure may be implemented.
Figure 2 shows an example of different Short Transmit Time Interval (sTTI) subframes (SFs).
Figure 3 shows an example of Hybrid Automatic Repeat Request (HARQ) timing and uplink (UL) grant timing for different sequences of sTTI SFs.
Figure 4 is a flowchart illustrating a method according to an example embodiment.
Figure 5 is a flowchart illustrating the operation of a radio access node and a wireless communication device according to another example embodiment.
Figures 6 and 7 are diagrams illustrating example embodiments of a wireless communication device.
Figures 8 through 10 are diagrams illustrating example embodiments of a radio access node.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Certain embodiments are presented in recognition of shortcomings of alternative approaches, such as the following.

Based on the existing Frame Structure 2 (FS 2), as given in Third Generation Partnership Project (3GPP) Technical Specification (TS) 36.211, version 13.0.1, uplink (UL) data and control information is only allowed to be transmitted in a UL subframe (SF), and downlink (DL) transmission is only possible in a DL SF and in a DL part (Downlink Pilot Time Slot (DwPTS)) of a special SF. Therefore, the delay for a granted UL data transmission will depend on when the next UL SF occurs, and the delay for a granted DL data transmission will depend on when the next DL SF or DwPTS occurs. The latency will thus depend on the frame alignment in Time Division Duplexing (TDD). The Hybrid Automatic Repeat Request (HARQ) timing for DL and UL transmissions, as shown in Table 2 and Table 3 above, also depends on the DL/UL configurations, which in turn has an impact on HARQ Round Trip Time (RTT).

Based on the existing FS 2, the latency due to frame alignment and HARQ RTT for TDD is much longer than that for FDD. Even with shortened TTIs, the latency in TDD cannot be scaled linearly proportional to the TTI length, and it is limited to the additional waiting time due to the DL/UL configurations. To further reduce the latency for TDD, the existing FS 2 needs to be enhanced.

In some alternative approaches, DL and UL short Transmit Time Interval (sTTI) transmissions are introduced on TDD special SFs, where the switch from DL to UL occurs for legacy User Equipment devices (UEs). In some other alternative approaches, sTTI transmissions are introduced on TDD DL and UL SFs. In particular, part of a TDD DL SF can be used for UL sTTI transmissions, and part of a TDD UL SF can be used for DL sTTI transmissions.

By allowing DL/UL sTTI transmissions in each TDD SF, latency in frame alignment and HARQ RTT for TDD can be further reduced. However, to introduce a UL sTTI on a DL SF or on the DwPTS of a special SF, legacy UEs cannot be scheduled for DL transmissions on this DL SF or on this special SF. This is not possible if the enhanced or evolved Node B (eNB) is restricted to not transmit and receive simultaneously within the system bandwidth. Similarly, to introduce a DL sTTI on a UL SF, UL data and control information of legacy UEs cannot be transmitted on this UL SF. Because some SFs cannot be used by legacy UEs, the HARQ timing of legacy UEs can be affected for UL and/or DL transmissions.

The HARQ timing of legacy UEs introduces a coupling between DL and UL SFs. When a legacy DL transmission is scheduled, the UL SF used for HARQ feedback for this DL transmission cannot be used for DL sTTI transmissions. The Physical HARQ Indicator Channel (PHICH) timing introduces a coupling between different UL SFs. When a legacy UL transmission is scheduled, the UL SF used for retransmission, which depends on the PHICH timing, cannot be used for DL sTTI transmissions. Therefore, to maintain backward compatibility, SFs used for introducing sTTIs needs to be carefully selected.

When scheduling an sTTI DL assignment, HARQ feedback will be sent for this assignment in the UL. Depending on the exact solution that will be adopted, this HARQ feedback will either be transmitted at a fixed time, or be scheduled by the eNB. In the first case, the Orthogonal Frequency Division Multiplexing (OFDM) symbols within the UL SF used for this HARQ feedback cannot be used for DL sTTI transmissions. In the second case, the eNB scheduling task becomes more difficult. As can be seen from these examples, the scheduling of sTTIs can become difficult, and by scheduling a legacy or short TTI DL assignment, future SFs/OFDM symbols need to be reserved for HARQ feedback. If this scheduling is done in a poor way, the potential latency gains will be smaller.

In certain embodiments described below, the set of SFs used for legacy operation and/or sTTI operation is signaled to the sTTI UE, which then knows where to look for sTTI and legacy grants, what timing to apply for UL grants, and when to send HARQ feedback.

The described embodiments may provide various potential benefits compared to conventional approaches. For instance, certain embodiments allow both UL and DL sTTI transmissions in the selected legacy TDD SFs, which provides latency reduction in frame alignment and HARQ RTT for TDD. By fixing the SF-type sequence within at least one radio frame, the network can set the UL grant timing and DL HARQ timing without explicit signaling this information to the sTTI UEs (i.e., UEs that support sTTIs), thereby reducing overhead. Moreover, the selected SFs can be indicated to sTTI UEs, such that the sTTI UEs do not need to monitor and try to decode control channels (both legacy and new control channels) on all SFs.

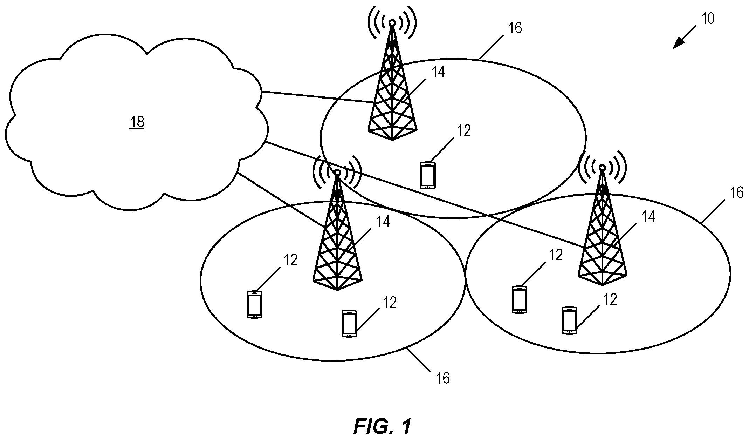

The described embodiments may be implemented in any appropriate type of communication system supporting any suitable communication standards and using any suitable components. As one example, certain embodiments may be implemented in a communication network 10 such as that illustrated in Figure 1. The communication network 10 is a cellular communications network (e.g., a Long Term Evolution (LTE) network) and, as such, is sometimes referred to herein as a cellular communications network 10.

The communication network 10 comprises a plurality of wireless communication devices 12 (e.g., conventional UEs, Machine Type Communication (MTC) / Machine-to-Machine (M2M) UEs) and a plurality of radio access nodes 14 (e.g., eNBs or other base stations). The wireless communication devices 12 are also referred to herein as wireless devices 12 or UEs 12. At least some of the wireless communication devices 12 support sTTI UL and/or sTTI DL transmissions, where these wireless communication devices 12 are referred to herein as sTTI wireless communication devices or sTTI UEs. The communication network 10 is organized into cells 16, which are connected to a core network 18 via corresponding radio access nodes 14. The radio access nodes 14 are capable of communicating with the wireless communication devices 12 along with any additional elements suitable to support communication between wireless communication devices 12 or between a wireless communication device 12 and another communication device (such as a landline telephone).

### SF type for enhanced FS2

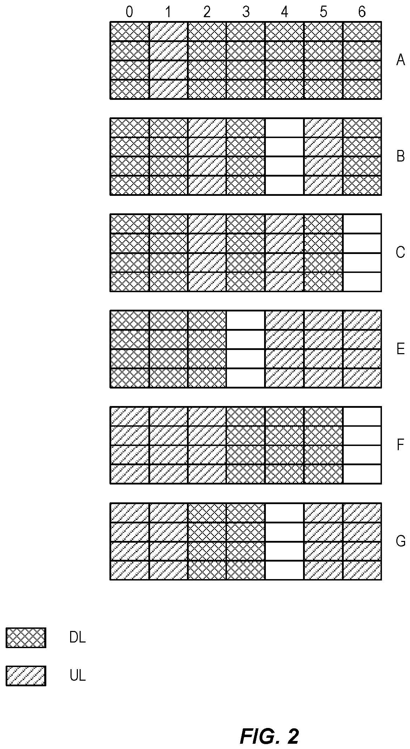

Besides the DL (D), UL (U), and special (S) SFs defined for FS2, here, six different SF types are defined and added for enhanced FS2, see Table 5. An example of each newly defined SF type is shown in Figure 2.

**Table 5: Description of SF types for enhanced FS2**

| **SF type** | **Description** | **Requirements** |
|---|---|---|
| A | Compliant with legacy SFO | PDCCH, BCH, SSS and CRS should not been affected |
| B | Compliant with legacy DL and S SFs | PDCCH, CRS, SSS and PSS should not been affected |
| C | Compliant with legacy S SF | PDCCH, PSS should not been affected |
| | Start with PDCCH, end with GP | To be used before U SFs |
| D | Legacy DL SF | |
| E | Compliant with legacy UL SFs | |
| | Start with DL part, end with UL part | |
| F | Compliant with legacy UL SFs. | To be used after S subframes. |
| | Start with UL part, end with GP | To be used before U subframes |
| G | Compliant with legacy UL SFs. | To be used after F subframes |
| | Start with UL part | |
| S | Legacy special SF | |
| U | Legacy UL SF | |

Figure 2 shows an example of sTTI SF types A, B, C, E, F, and G. The index is the sTTI number within one SF, assuming a 2-symbol Transmit Time Interval (TTI) length. In the cases where UL follows DL directly, a one symbol gap (GP) is included in the DL sTTI.

### Scheduling of legacy and sTTI SFs

In the following, it is assumed that a Physical Downlink Control Channel (PDCCH) region will be available in newly added SF types that are compliant with legacy DL or special SFs (e.g., types A, B, C as outlined in Table 5 and type E if it is compliant with legacy special SF). In the PDCCH region, both legacy DL and UL transmissions, as well as sTTI DL and UL transmissions, can be scheduled.

In addition, DL and UL sTTI transmissions can be scheduled in sPDCCH, located in the DL sTTI. A DL sTTI can be introduced in a UL SF, if this UL SF is not used for a UL legacy TTI transmission, e.g., Physical Uplink Shared Channel (PUSCH), Physical Random Access Channel (PRACH) transmissions, and/or Physical Uplink Control Channel (PUCCH) HARQ feedback. By assigning different frequency bands for sTTI and legacy TTI transmissions: a DL SF dedicated for legacy use can be split into multiple DL sTTIs; part of a special (S) subframe dedicated for legacy use, e.g., DwPTS and GP of a special SF, can be split into multiple DL sTTIs; and a UL SF dedicated for legacy use can be split into multiple UL sTTIs. Therefore, DL and special SFs can also be used to carry sPDCCH for sTTI scheduling.

### Signaling of SF set

For each TDD DL/UL configuration, a table for SF selection for sTTI or legacy transmissions is specified. The SF-type sequence in the table should have the length of a radio frame. Each row ("set") of the table gives a predefined SF-type sequence, within which the bold and italicized SFs (i.e., D, S, and U) are used for legacy transmissions, and the rest of the SFs are used only for sTTI transmissions.

An example of SF selection table for TDD UL/DL configuration 1 is given in Table 6, with definitions of different SF types given in Table 5. In this example, Set 0 corresponds to legacy use (bold and italicized) of all SFs within a radio frame, while set 1 corresponds to sTTI use (normal font) of all SFs within a radio frame, and the rest of the sets have varying numbers of SFs that are used for legacy transmissions and sTTI transmissions. Depending on the set index and the SF index, different sTTI SF types are used: A, B, C, E, F, and G.

**Table 6: Example of different sTTI SF selections within a radio frame for TDD configuration 1**

| **SF set ID** | **SF index n** | | | | | | | | | |
|---|---|---|---|---|---|---|---|---|---|---|
| | **0** | **1** | **2** | **3** | **4** | **5** | **6** | **7** | **8** | **9** |
| **0** | ***D*** | ***S*** | ***U*** | ***U*** | ***D*** | ***D*** | ***S*** | ***U*** | ***U*** | ***D*** |
| 1 | A | B | E | E | B | B | B | E | E | B |
| 2 | A | C | ***U*** | E | B | B | B | E | E | B |
| 3 | A | C | ***U*** | E | B | B | ***S*** | F | G | B |
| 4 | A | C | ***U*** | E | B | ***D*** | ***S*** | F | G | B |
| 5 | A | C | ***U*** | E | ***D*** | B | ***S*** | F | ***U*** | B |
| 6 | ***D*** | ***S*** | ***U*** | E | B | ***D*** | C | ***U*** | E | B |

By transmitting a row index of the SF selection table, i.e., the SF set Identifier (ID), to an sTTI UE, the eNB can indicate the sTTI UE about the SF selection for sTTI or legacy transmissions. This signaling can be done either through higher layer signaling (Radio Resource Control (RRC) configuration) or through system level information or through Downlink Control Information (DCI) messages. The signaled sTTI SF set can be valid for one radio frame or longer.

By decoding the row index of the SF selection table, i.e., the SF set ID, the sTTI UE then knows in which SFs legacy TTI transmissions can occur. Therefore, the sTTI UE does not need to monitor and try to decode all control information specific to sTTIs in these SFs. For example, no UL scheduling grant is expected from the UL SFs.

If each SF type has a fixed sTTI pattern, then, by decoding the row index, the sTTI UE can know the sTTI pattern for the whole radio frame and, thereby, reducing the search spaces for sPDCCH decoding.

If a PHICH transmission containing Acknowledgement/Negative Acknowledgement (ACK/NACK) feedback for a sTTI UL transmission is expected in one of these DL SFs, the UE should still monitor this channel.

In some embodiments, the SF set used for sTTI transmissions is signaled to sTTI UEs.

In some embodiments, the signaled SF set ID can be valid for one radio frame or longer.

In some embodiments, a new signaled SF set can replace the configured SF set during the radio frame.

### Monitoring legacy grants

For a given SF set ID, the sTTI UE knows in which SF to look for legacy grants in PDCCH, i.e., in all DL or special SFs, and k subframes before a UL SF as given by the legacy UL grant timing. This SF can be a SF that contains sTTI transmissions, e.g. when the SF set ID is 2 in the example of Table 6, a B SF will be used to schedule the UL SF. In the rest of the SFs it only needs to search for sTTI grants in the PDCCH. As discussed above, signaling of the SF set ID can be done either through higher layer signaling (RRC configuration) or through system level information or through DCI messages. The signaled sTTI SF set can be valid for one radio frame or longer.

In one embodiment, the SF selection for legacy UEs is signaled at the first SF, i.e., SF 0, of each radio frame. By reading the PDCCH of SF 0, the sTTI UEs know in which SFs no sTTI grant is to be expected.

In one embodiment, this configuration is included in any of the sTTI grants. For example, a notification can be included in the DL grant, which indicates that a specific future SF after the current SF will be a legacy UL SF, such that no DL grant (and thus no DL sTTI) is expected in that future SF. In the same manner, a notification can be included in the UL grant, which indicates that a specific future SF after the current SF will be a legacy DL SF, such that no UL grant (and thus no DL sTTI) is expected for that future SF.

### Monitoring sTTI grants

The sTTI UE needs to monitor both PDCCH and sPDCCH for sTTI grants. UL sTTI grants can thereby be sent in a SF used for legacy (DL or special), e.g. as in the sequence S, F when the SF set ID is 3 in Table 6. However, certain legacy use SFs do not need to be monitored in PDCCH for sTTI grants, e.g. the DL SF when the SF set ID is 4 in Table 6.

Because the sequence of SFs (legacy use or sTTI use) is signaled to the UE, it knows which SFs it should monitor for fast and legacy grants, respectively. An example of signaled sets for TDD configuration 1 is given in Table 6.

In some embodiments, the SFs used for legacy transmissions can also be used for sTTI transmissions of the same direction, e.g. a DL SF can be used for multiple DL sTTIs. In this case the UE should monitor also the DL and special SFs for sTTI UL and DL grants.

In one embodiment, the signaled set of SFs also corresponds to one specific sequence of sTTIs within the SFs. This is also exemplified in Table 6, where six different types of sTTI SFs are used, each with a predefined pattern, as in the example in Figure 2. Here the sTTI SF type used is defined based on several criteria:
- Ensuring backwards compatibility of PDCCH and Cell Specific Reference Signal (CRS). This implies that an sTTI SF inserted in DL and special SF indices needs to follow a certain DL pattern.
- Ensuring GP before UL SF. This implies that an sTTI SF inserted in a special SF index should end with a GP.
- Provide low latency for data and feedback. This implies, e.g., many switching points and that as sTTI SF followed by a special SF should start with a UL part.

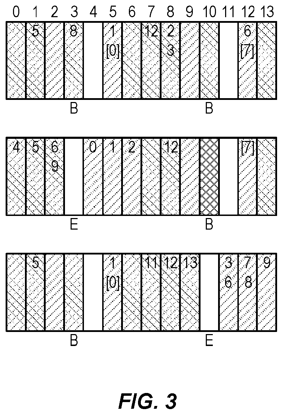

The SF used for legacy operation can only be split into sTTI of the same types, e.g. a SF used for DL legacy operation may for instance be used for 7 DL sTTI. But, e.g., a UL SF may be used for any predefined sequence if assigned for sTTI usage. Knowing the structure of the SF beforehand allows the UE to know when to look for DL fast grants and when to look for UL fast grants, as illustrated in Figure 3. The connection between UL grant and UL sTTI may also be predefined according to the signaling.

Figure 3 illustrates an example of HARQ timing and UL grant timing for different sequences of sTTI SFs. Here the sequence BB, EB, or BE SFs generate different expected UL grant locations (numbers in DL sTTIs are UL grants for the given sTTI) in SF B (sTTI 0 and 3). Also, the HARQ for DL sTTI transmissions are placed different for the cases (numbers in UL sTTIs are HARQ for the given DL sTTI). In this example, the timing is greater than or equal to N+4. HARQ indices in brackets are not required if the DL sTTI indicated is occupied by PDCCH.

### Uplink scheduling timing for sTTI UEs

For a given signaled SF set ID and TDD configuration, the UE can know the timing for a given sTTI UL grant. This is achieved by using a fixed mapping between DL sTTI and UL sTTI, just as in legacy TDD for a certain configuration, with the difference that the mapping also depends on the used SF set ID. For instance, the sTTI UL grant timing sent in the F SF is different in SF set 4 and 5 of Table 6, depending on the presence or not of the UL SF.

In some embodiments, a fixed UL scheduling timing is derived from a given signaled SF set ID and the TDD configuration ID.

### HARQ feedback for sTTI UEs

Given that the sTTI sequence has been signaled to the UE, it may apply a predefined pattern for HARQ feedback for data sent in DL sTTIs. In the example of Table 6, the UE knows beforehand the sequence of SF types and therefore knows in which sPUCCH resource it should send HARQ feedback. Any given sequence of subframes, e.g. EB, BE, or BB, then corresponds to a specific HARQ timing rule for the DL transmission, as illustrated in Figure 3.

In some embodiments, a fixed DL HARQ timing is derived from a given signaled SF set ID and the TDD configuration ID.

### Traffic Adaptation

For each TDD DL/UL configuration, the SF selection can adapt to the ratio of the legacy UEs and the short TTI UEs. If there are more legacy UEs in the network, then more SFs can be selected for legacy TDD operation. If there are more sTTI UEs in the network, then less SFs will be selected for legacy TDD operation. The SF selection can also adapt to the ratio of DL and UL traffic of legacy UEs, if there are more DL traffic for legacy UEs, then more DL SFs can be selected for legacy TDD operation.

In some embodiments, the signaling of SF set ID can be adapted to the network traffic load.

Again, Figure 3 shows an example of HARQ timing and UL grant timing for different sequences of sTTI SFs. Here the sequence BB, EB, or BE SFs generate different expected UL grant locations (numbers in DL sTTIs are UL grants for the given sTTI) in SF B (sTTI 0 and 3). Also, the HARQ for DL sTTI transmissions are placed different for the cases (numbers in UL sTTIs are HARQ for the given DL sTTI). In this example, the timing is greater than or equal to =N+4. HARQ indices in brackets are not required if the DL sTTI indicated is occupied by PDCCH.

### Example Embodiments of the Network Operation

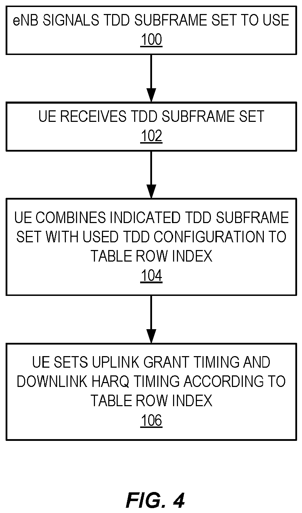

Figure 4 is a flowchart illustrating a method according to an example embodiment. In this example, some of the illustrated steps are performed by the radio access node 14, which is referred to as an eNB in this example, whereas other steps are performed by the wireless communication device 12, which is referred to as a UE in this example.

Referring to Figure 4, the method comprises an eNB signaling TDD SF set to use (step 100), a UE receiving the TDD SF set (step 102), the UE combining the indicated TDD SF set with a used TDD configuration to table row index (step 104), and the UE setting UL grant timing and DL HARQ timing according to the table row index (step 106). With respect to step 104, the TDD configuration (legacy) is typically set at an earlier stage, and when the UE is informed of the SF set (new) this means different sequences of SFs depending on configuration. For example: set 0 may mean a sequence DSUUUDSUUU in configuration 0, but DSUUDDSUUD with configuration 1. So, different tables are "loaded" depending on the configuration.

More specifically, as discussed above, the eNB (or more generally the radio access node 14) sends an indication of the TDD SF set to use in step 100. This indication may be sent via, e.g., RRC signaling. For example, given a particular FS 2 DL/UL configuration, the eNB signals an indication of the particular TDD SF set to use. As an example, looking at Table 6 above and assuming that the FS 2 DL/UL configuration is TDD configuration 1, the eNB transmits the SF set ID (e.g., a value in the range of 0 to 6) for the TDD SF set to use. Thus, if for example the SF set to use is the SF set having the SF set ID of 3, then the eNB transmits the SF set ID value of 3 to thereby indicate the SF set {A, C, U, E, B, B, S, F, G, B}.

The UE receives the indication of the TDD SF set to use in step 102. As discussed above, in step 104, the UE then combines the indication of the TDD SF set (e.g., the SF set ID) and the used TDD configuration (e.g., DL/UL configuration 1) to thereby determine the TDD SF set as defined in, e.g., a predefined table of SF sets for the used TDD configuration. As discussed above, the UE then sets the UL grant timing and/or the DL HARQ timing according to the determined TDD SF set in step 106.

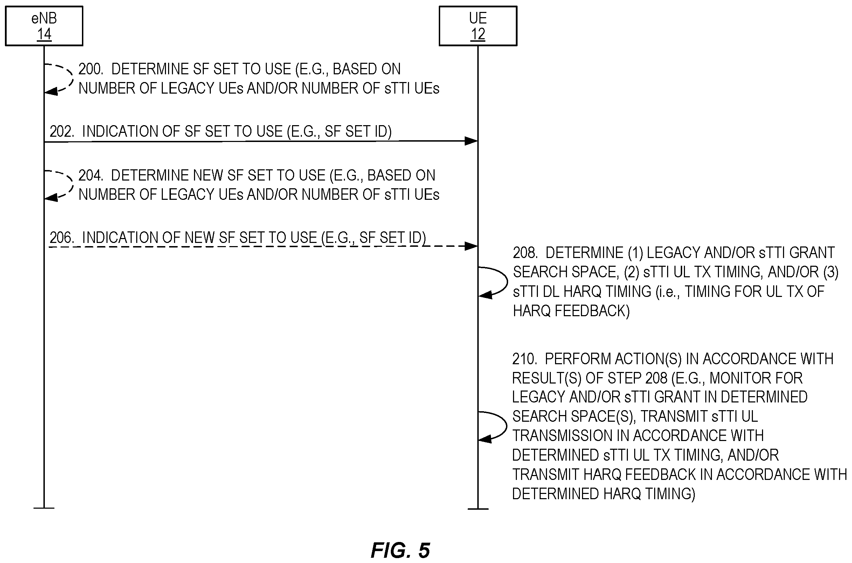

Figure 5 illustrates the operation of a radio access node 14 and a wireless communication device 12 that supports sTTI transmission according to at least some of the embodiments described above. In this example, some of the illustrated steps are performed by a radio access node 14, which is referred to as an eNB 14 in this example, whereas other steps are performed by the wireless communication device 12, which is referred to as a UE 12 in this example. Optional steps are indicated by dashed lines.

As illustrated, the eNB 14 determines the TDD SF set to use, e.g., based on a number of legacy UEs connected to the cell 16 and/or a number of sTTI UEs connected to the cell 16. For example, looking at Table 6 and assuming that the used TDD configuration is TDD configuration 1, the SF set having SF Set ID = 1 may be used if there is a large number of legacy UEs and/or a small number of sTTI UEs, whereas the SF set having SF Set ID = 6 may be used if there is a small number of legacy UEs and/or a large number of sTTI UEs. Thus, in other words, different TDD SF sets may be preferred for different traffic conditions.

The eNB 14 sends and the UE 12 receives an indication of the TDD SF set to use (e.g., the SF set ID of the TDD SF set) (step 202). Optionally, the eNB 14 may adapt the SF set to use based on, e.g., changing traffic conditions (steps 204 and 206). In some embodiments, the indication of the set of SFs to use is combined with the TDD DL/UL configuration to determine the actual set of TDD SFs to use, as discussed above.

As discussed above in detail, the UE 12 determines: (1) a legacy UL grant search space and/or an sTTI UL grant search space, (2) sTTI UL transmission timing, and/or (3) sTTI DL HARQ timing based on the indicated TDD SF set (step 208). The UE 12 then performs one or more action(s) in accordance with the result(s) of step 208 (step 210). For example, the UE 12 monitors for legacy and/or sTTI UL grants in the determined legacy and/or sTTI UL grant search space determined based on the indicated TDD SF set, transmits an sTTI UL transmission in accordance with the sTTI UL transmission timing determined based on the indicated TDD SF set, and/or transmits DL HARQ feedback in accordance with the DL HARQ timing determined based on the indicated TDD SF set.

### Example Embodiments of a Wireless Communication Device and Radio Access Node

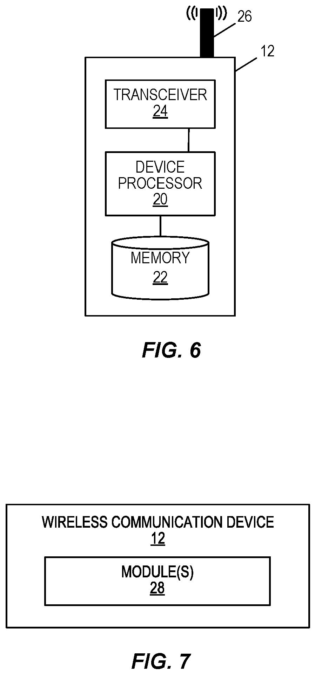

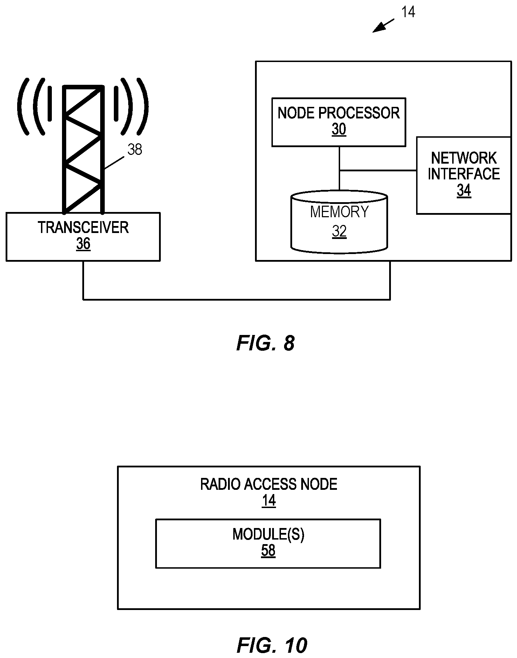

Although wireless communication devices 12 may represent communication devices that include any suitable combination of hardware and/or software, these wireless communication devices may, in certain embodiments, represent devices such as an example wireless communication device illustrated in greater detail by Figures 6 and 7. Similarly, although the illustrated radio access node may represent network nodes that include any suitable combination of hardware and/or software, these nodes may, in particular embodiments, represent devices such as the example radio access node illustrated in greater detail by Figures 8 through 10.

Referring to Figure 6, a wireless communication device 12 comprises a device processor 20, a memory 22, a transceiver 24, and an antenna 26. As will be appreciated by those of skill in the art, the device processor 20 includes, e.g., a Central Processing Unit(s) (CPU(s)), a Digital Signal Processor(s) (DSP(s)), an Application Specific Integrated Circuit(s) (ASIC(s)), a Field Programmable Gate Array(s) (FPGA(s)), and/or the like, or any combination thereof. In certain embodiments, some or all of the functionality described as being provided by UEs, MTC or M2M devices, and/or any other types of wireless communication devices may be provided by the device processor 20 executing instructions stored on a computer-readable medium, such as the memory 22 shown in Figure 6. Alternative embodiments may include additional components beyond those shown in Figure 6 that may be responsible for providing certain aspects of the device's functionality, including any of the functionality described herein.

Figure 7 illustrates another example embodiment of a wireless communication device 12. As illustrated, the wireless communication device 12 includes one or more modules 28, each of which is implemented in software. The module(s) 28 provide the functionality of the wireless communication device 12 (e.g., the functionality of the UE, MTC or M2M device, or any other type of wireless communication device) as described herein. In one example, the module(s) 28 include a determining module operable to perform the function of step 208 of Figure 5 and a performing module operable to perform the function of step 210 of Figure 5.

Referring to Figure 8, a radio access node 14 comprises a node processor 30, memory 32, a network interface 34, a transceiver 36, and an antenna(s) 38. As will be appreciated by those of skill in the art, the node processor 30 includes, e.g., a CPU(s), a DSP(s), an ASIC(s), a FPGA(s), and/or the like, or any combination thereof. In certain embodiments, some or all of the functionality described as being provided by a base station, a node B, an eNB, and/or any other type of network node may be provided by node processor 30 executing instructions stored on a computer-readable medium, such as the memory 32 shown in Figure 8. Alternative embodiments of the radio access node 14 may comprise additional components to provide additional functionality, such as the functionality described herein and/or related supporting functionality.

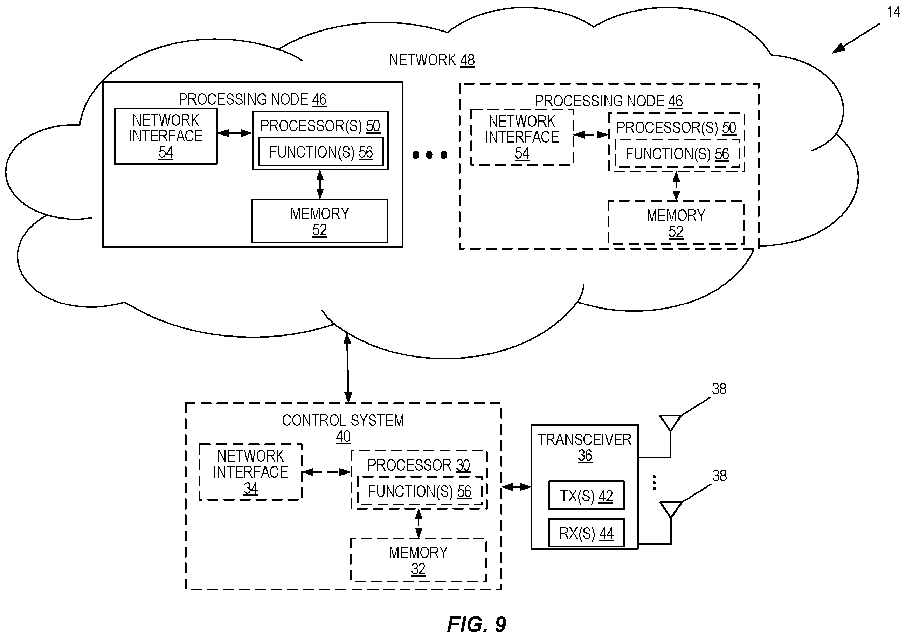

Figure 9 is a schematic block diagram that illustrates a virtualized embodiment of the radio access node 14 according to some embodiments of the present disclosure. As used herein, a "virtualized" radio access node 14 is a radio access node 14 in which at least a portion of the functionality of the radio access node 14 is implemented as a virtual component (e.g., via a virtual machine(s) executing on a physical processing node(s) in a network(s)). As illustrated, the radio access node 14 optionally includes a control system 40 comprising the node processor 30, the memory 32, and the network interface 34, as described with respect to Figure 8. In addition, the radio access node 14 includes the transceiver 36, as described with respect to Figure 8. As will be appreciated by one of skill in the art, the transceiver 36 includes one or more transmitters 42 and one or more receivers 44 coupled to the antenna(s) 38. The control system 40 (if present) is connected to one or more processing nodes 46 coupled to or included as part of a network(s) 48 via the network interface 34. Alternatively, if the control system 40 is not present, the transceiver 36 is connected to the one or more processing nodes 46 via a network interface(s). Each processing node 46 includes one or more processors 50 (e.g., CPUs, ASICs, DSPs, FPGAs, and/or the like), memory 52, and a network interface 54.

In this example, functions 56 of the radio access node 14 (e.g., the functions of the eNB, base station, or other type of radio access node) described herein are implemented at the one or more processing nodes 46 or distributed across the control system 40 (if present) and the one or more processing nodes 46 in any desired manner. In some particular embodiments, some or all of the functions 56 of the radio access node 14 described herein are implemented as virtual components executed by one or more virtual machines implemented in a virtual environment(s) hosted by the processing node(s) 46. As will be appreciated by one of ordinary skill in the art, additional signaling or communication between the processing node(s) 46 and the control system 40 (if present) or alternatively the transceiver 36 is used in order to carry out at least some of the desired functions. Notably, in some embodiments, the control system 40 may not be included, in which case the transceiver 36 communicates directly with the processing node(s) 46 via an appropriate network interface(s).

In some particular embodiments, higher layer functionality (e.g., layer 3 and up and possibly some of layer 2 of the protocol stack) of the radio access node 14 may be implemented at the processing node(s) 46 as virtual components (i.e., implemented "in the cloud") whereas lower layer functionality (e.g., layer 1 and possibly some of layer 2 of the protocol stack) may be implemented in the transceiver 36 and possibly the control system 40.

Figure 10 illustrates another example embodiment of a radio access node 14. As illustrated, the radio access node 14 includes one or more modules 58, each of which is implemented in software. The module(s) 58 provides the functionality of the radio access node 14 (e.g., the functionality of the eNB, base station, or any other type of radio access node) as described herein. In one example, the module(s) 58 includes a signaling module operable to signal an indication of a TDD SF set to use as described above with respect to step 100 of Figure 4 and step 202 of Figure 5.

As indicated by the foregoing, in certain embodiments a used sTTI set of SFs in TDD operation is signaled to the sTTI UE in terms of an index corresponding to a fixed sequence of sTTI SF types and legacy SFs. This information is used by the UE to search for sTTI and legacy grants, to set the UL grant timing and the DL HARQ timing.

While the disclosed subject matter has been presented above with reference to various embodiments, it will be understood that various changes in form and details may be made to the described embodiments without departing from the overall scope of the disclosed subject matter.

The following acronyms are used throughout this disclosure.
- • 3GPP: Third Generation Partnership Project
- • ACK: Acknowledgement
- • ASIC: Application Specific Integrated Circuit
- • BLER: Block Error Rate
- • CPU: Central Processing Unit
- • CRS: Cell Specific Reference Signal
- • DCI: Downlink Control Information
- • DL: Downlink
- • DSP: Digital Signal Processor
- • DwPTS: Downlink Pilot Time Slot
- • eNB: Enhanced or Evolved Node B
- • FDD: Frequency Division Duplexing
- • FPGA: Field Programmable Gate Array
- • FS: Frame Structure
- • GP: Guard Period
- • HARQ: Hybrid Automatic Repeat Request
- • HTTP: Hypertext Transfer Protocol
- • ID: Identifier
- • Kbyte: Kilobyte
- • LAA: License Assisted Access
- • LTE: Long Term Evolution
- • M2M: Machine-to-Machine
- • Mbyte: Megabyte
- • ms: Millisecond
- • MTC: Machine Type Communication
- • NACK: Negative Acknowledgement
- • OFDM: Orthogonal Frequency Division Multiplexing
- • PDCCH: Physical Downlink Control Channel
- • PHICH: Physical Hybrid Automatic Repeat Request Indicator Channel
- • PRACH: Physical Random Access Channel
- • PUCCH: Physical Uplink Control Channel
- • PUSCH: Physical Uplink Shared Channel
- • RAT: Radio Access Technology
- • RNC: Radio Network Controller
- • RRC: Radio Resource Control
- • RTT: Round Trip Time
- • SC-FDMA: Single Carrier Frequency Division Multiple Access
- • SF: Subframe
- • SIB: System Information Block
- • sTTI: Short Transmit Time Interval
- • TCP: Transmission Control Protocol
- • TDD: Time Division Duplexing
- • TS: Technical Specification
- • TTI: Transmit Time Interval
- • UE: User Equipment
- • UL: Uplink
- • UpPTS: Uplink Pilot Time Slot

Those skilled in the art will recognize improvements and modifications to the embodiments of the present disclosure. All such improvements and modifications are considered within the scope of the appended claims.

## Claims

1. A method of operation of a network node (14) in a cellular communications network (10), comprising:
signaling (100, 202), to a short Transmit Time Interval, sTTI, wireless device (12), an indication of a Time Division Duplexing, TDD, subframe set to use, where the signaled TDD subframe set to use has a length of a 10 milliseconds legacy TDD radio frame used by legacy wireless devices, replaces said legacy TDD radio frame and specifies a predefined subframe selection for legacy Transmit Time Interval, TTI, subframes transmissions of length 1 ms and sTT
subframes transmissions of length shorter than 1 ms.

2. The method of claim 1 wherein the TDD subframe set is one of a plurality of predefined TDD subframe sets defined for a TDD downlink/uplink configuration configured for a respective cell.

3. The method of claim 2 wherein the plurality of predefined TDD subframe sets specify sequences of subframes of a plurality of TDD subframe types, the plurality of TDD subframe types comprising a downlink subframe type, an uplink subframe type, a special subframe type, and one or more additional subframe types defined for sTTI transmissions.

4. The method of claim 3 wherein each additional subframe type of the one or more additional subframe types has a fixed sTTI pattern defined for the additional subframe type, the fixed sTTI pattern comprising one or more downlink sTTIs and one or more uplink sTTIs.

5. The method of any one of claims 1 to 4 wherein the indication of the TDD subframe set to use is valid for a radio frame or longer.

6. The method of any one of claims 1 to 5 wherein the TDD subframe set to use replaces a previously configured TDD subframe set to use.

7. The method of any one of claims 1 to 6 wherein signaling (100, 202) the indication of the TDD subframe set comprises signaling (100, 202) the indication of the TDD subframe set in one of: a first subframe of a radio frame; and an sTTI grant.

8. The method of any one of claims 1 to 7 wherein the TDD subframe set corresponds to a specific sequence of sTTIs within a corresponding plurality of TDD subframes.

9. The method of any one of claims 1 to 8 further comprising determining (200) the TDD subframe set to use based on at least one criterion from the group of: a ratio of legacy wireless devices and sTTI wireless devices and a ratio of downlink and uplink traffic of legacy wireless devices.

10. A network node (14) for a cellular communications network (10), comprising:
a processor (30, 50); and
memory (32, 52) comprising instructions executable by the processor (30, 50) whereby the network node (14) is operable to:
signal, to a short Transmit Time Interval, sTTI, wireless device (12), an indication of a Time Division Duplexing, TDD, subframe set to use, where the signaled TDD subframe set to use has a length of a 10 milliseconds legacy TDD radio frame used by legacy wireless devices, replaces said legacy TDD radio frame and specifies a predefined subframe selection for legacy Transmit Time Interval, TTI, subframes transmissions of length 1 ms and sTTI subframes transmissions of length shorter than 1 ms.

11. A method of operation of a short Transmit Time Interval, sTTI, wireless device (12) in a cellular communications network (10), comprising:
receiving (102, 202), from a network node (14), an indication of a Time Division Duplexing, TDD, subframe set to use, where the TDD subframe set to use has a length of a 10 milliseconds legacy TDD radio frame used by legacy wireless devices, replaces said legacy TDD radio frame and specifies a predefined subframe selection for legacy Transmit Time Interval, TTI, subframes transmissions of length 1 ms and sTTI subframes transmissions of length shorter than 1 ms; and
determining (104-106, 208) at least one parameter comprising a search space for legacy grants, a search space for sTTI grants, sTTI uplink transmission timing, and/or downlink Hybrid Automatic Repeat Request, HARQ, timing.

12. The method of claim 11 wherein the indication of the TDD subframe set to use is a TDD subframe set identifier, and determining (104, 208) the at least one parameter comprises:
combining (104) the TDD subframe set identifier and a TDD downlink/uplink configuration identifier for a used TDD downlink/uplink configuration for a respective cell to thereby obtain a row index in a table of TDD subframe sets for the used TDD downlink/uplink configuration; and
setting (106) the sTTI uplink transmission timing and the downlink HARQ timing based on the row index.

13. The method of claim 11 wherein the at least one parameter comprises one of: a search space for legacy grants and a search space for sTTI grants; sTTI uplink transmission timing; and downlink HARQ timing.

14. The method of any one of claims 11 to 13 wherein receiving (102, 202) the indication of the TDD subframe set comprises receiving (102, 202) the indication of the TDD subframe set in one of: a first subframe of a radio frame; and an sTTI grant.

15. A short Transmit Time Interval, sTTI, wireless device (12) for a cellular communications network (10), comprising:
a transceiver (24);
a processor (20); and
memory (22) comprising instructions executable by the processor (20) whereby the wireless device (12) is operable to:
receive, from a network node (14), an indication of a Time Division Duplexing, TDD, subframe set to use, where the TDD subframe set to use has a length of a 10 milliseconds legacy TDD radio frame used by legacy wireless devices, replaces said legacy TDD radio frame and specifies a predefined subframe selection for legacy Transmit Time Interval, TTI, subframes transmissions of length 1 ms and sTTI subframes transmissions of length shorter than 1 ms; and
determine at least one parameter comprising a search space for legacy grants, a search space for sTTI grants, sTTI uplink transmission timing, and/or downlink Hybrid Automatic Repeat Request, HARQ, timing.

## Patentansprüche

1. Betriebsverfahren für einen Netzwerkknoten (14) in einem zellularen Kommunikationsnetzwerk (10), umfassend:
Signalisieren (100, 202) einer Anzeige eines zu verwendenden Zeitduplex-,TDD-,Unterrahmensatzes an eine Drahtlosvorrichtung (12) mit kurzen Übertragungszeitintervallen, sTTI, wobei der signalisierte zu verwendende TDD-Unterrahmensatz eine Länge eines 10-Millisekunden-Legacy-TDD-Funkrahmens aufweist, der von Legacy-Drahtlosvorrichtungen verwendet wird, den Legacy-TDD-Funkrahmen ersetzt und eine vordefinierte Unterrahmenauswahl für Legacy-Übertragungszeitintervall-,TTI-,Unterrahmenübertragungen mit einer Länge von 1 ms und sTTI-Unterrahmenübertragungen mit einer kürzeren Länge als 1 ms spezifiziert.

2. Verfahren nach Anspruch 1, wobei der TDD-Unterrahmensatz einer von einer Mehrzahl von vordefinierten TDD-Unterrahmensätzen ist, die für eine TDD-Downlink-/-Uplink-Konfiguration definiert sind, die für eine jeweilige Zelle konfiguriert ist.

3. Verfahren nach Anspruch 2, wobei die Mehrzahl von vordefinierten TDD-Unterrahmensätzen Folgen von Unterrahmen einer Mehrzahl von TDD-Unterrahmentypen spezifiziert, wobei die Mehrzahl von TDD-Unterrahmentypen einen Downlink-Unterrahmentyp, einen Uplink-Unterrahmentyp, eine Spezialunterrahmentyp und einen oder mehrere zusätzliche Unterrahmentypen umfasst, die für sTTI-Übertragungen definiert sind.

4. Verfahren nach Anspruch 3, wobei jeder zusätzliche Unterrahmentyp des einen oder der mehreren zusätzlichen Unterrahmentypen ein festes sTTI-Muster aufweist, das für den zusätzlichen Unterrahmentyp definiert ist, wobei das feste sTTI-Muster einen oder mehrere Downlink-sTTIs und einen oder mehrere UplinksTTIs umfasst.

5. Verfahren nach einem der Ansprüche 1 bis 4, wobei die Anzeige des zu verwendenden TDD-Unterrahmensatzes für einen Funkrahmen oder länger gültig ist.

6. Verfahren nach einem der Ansprüche 1 bis 5, wobei der zu verwendende TDD-Unterrahmensatz einen vorher konfigurierten zu verwendenden TDD-Unterrahmensatz ersetzt.

7. Verfahren nach einem der Ansprüche 1 bis 6, wobei das Signalisieren (100, 202) der Anzeige des TDD-Unterrahmensatzes ein Signalisieren (100, 202) der Anzeige des TDD-Unterrahmensatzes in einem umfasst von: einem ersten Unterrahmen eines Funkrahmens und einer sTTI-Freigabe.

8. Verfahren nach einem der Ansprüche 1 bis 7, wobei der TDD-Unterrahmensatz einer spezifischen Folge von sTTIs innerhalb einer entsprechenden Mehrzahl von TDD-Unterrahmen entspricht.

9. Verfahren nach einem der Ansprüche 1 bis 8, ferner umfassend ein Bestimmen (200) des zu verwendenden TDD-Unterrahmensatzes basierend auf mindestens einem Kriterium aus der Gruppe von: einem Verhältnis von Legacy-Drahtlosvorrichtungen und sTTI-Vorrichtungen und einem Verhältnis von Downlink- und Uplink-Verkehr von Legacy-Drahtlosvorrichtungen.

10. Netzwerkknoten (14) für ein zellulares Kommunikationsnetzwerk (10), umfassend:
einen Prozessor (30, 50); und
einen Speicher (32, 52), der Anweisungen umfasst, die vom Prozessor (30, 50) ausgeführt werden können, wodurch der Netzwerkknoten (14) betrieben werden kann zum:
Signalisieren einer Anzeige eines zu verwendenden Zeitduplex-,TDD-,Unterrahmensatzes an eine Drahtlosvorrichtung (12) mit kurzen Übertragungszeitintervallen, sTTI, wobei der signalisierte, zu verwendende TDD-Unterrahmensatz eine Länge eines 10-Millisekunden-Legacy-TDD-Funkrahmens aufweist, der von Legacy-Drahtlosvorrichtungen verwendet wird, den Legacy-TDD-Funkrahmen ersetzt und eine vordefinierte Unterrahmenauswahl für Legacy-Übertragungszeitintervall-,TTI-,Unterrahmenübertragungen mit einer Länge von 1 ms und sTTI-Unterrahmenübertragungen mit einer kürzeren Länge als 1 ms spezifiziert.

11. Betriebsverfahren für eine Drahtlosvorrichtung (12) mit kurzen Übertragungszeitintervallen, sTTI, in einem zellularen Kommunikationsnetzwerk (10), umfassend:
Empfangen (102, 202) einer Anzeige eines zu verwendenden Zeitduplex-,TDD-,Unterrahmensatzes von einem Netzwerkknoten (14), wobei der zu verwendende TDD-Unterrahmensatz eine Länge eines 10-Millisekunden-Legacy-TDD-Funkrahmens aufweist, der von Legacy-Drahtlosvorrichtungen verwendet wird, den Legacy-TDD-Funkrahmen ersetzt und eine vordefinierte Unterrahmenauswahl für Legacy-Übertragungszeitintervall-,TTI-,Unterrahmenübertragungen mit einer Länge von 1 ms und sTTI-Unterrahmenübertragungen mit einer kürzeren Länge als 1 ms spezifiziert; und
Bestimmen (104-106, 208) mindestens eines Parameters, der einen Suchraum für Legacy-Freigaben, einen Suchraum für sTTI-Freigaben, sTTI-Uplink-Übertragungszeitvorgabe und/oder Zeitvorgabe für hybride automatische Downlink-Wiederholungsanforderung, HARQ, umfasst.

12. Verfahren nach Anspruch 11, wobei die Anzeige des zu verwendenden TDD-Unterrahmensatzes eine TDD-Unterrahmensatzkennung ist, und das Bestimmen (104, 208) des mindestens einen Parameters umfasst:
Kombinieren (104) der TDD-Unterrahmensatzkennung mit einer TDD-Downlink-/-Uplink-Konfigurationskennung für eine verwendete TDD-Downlink-/-Uplink-Konfiguration für eine jeweilige Zelle, um dadurch einen Zeilenindex in einer Tabelle von TDD-Unterrahmensätzen für die verwendete TDD-Downlink-/-Uplink-Konfiguration zu erhalten; und
Festlegen (106) der sTTI-Uplink-Übertragungszeitvorgabe und der Downlink-HARQ-Zeitvorgabe basierend auf dem Zeilenindex.

13. Verfahren nach Anspruch 11, wobei der mindestens eine Parameter eines umfasst von: einem Suchraum für Legacy-Freigaben und einen Suchraum für sTTI-Freigaben; sTTI-Uplink-Übertragungszeitvorgabe und Downlink-HARQ-Zeitvorgabe.

14. Verfahren nach einem der Ansprüche 11 bis 13, wobei das Empfangen (102, 202) der Anzeige des TDD-Unterrahmensatzes ein Empfangen (102, 202) der Anzeige des TDD-Unterrahmensatzes in einem umfasst von: einem ersten Unterrahmen eines Funkrahmens und einer sTTI-Freigabe.

15. Drahtlosvorrichtung (12) mit kurzen Übertragungszeitintervallen, sTTI, für ein zellulares Kommunikationsnetzwerk (10), umfassend:
einen Sendeempfänger (24);
einen Prozessor (20); und
einen Speicher (22), der Anweisungen umfasst, die vom Prozessor (20) ausgeführt werden können, wodurch die drahtlose Vorrichtung (12) ausgelegt ist zum:
Empfangen einer Anzeige eines zu verwendenden Zeitduplex-,TDD-,Unterrahmensatzes von einem Netzwerkknoten (14), wobei der zu verwendende TDD-Unterrahmensatz eine Länge eines 10-Millisekunden-Legacy-TDD-Funkrahmens aufweist, der von Legacy-Drahtlosvorrichtungen verwendet wird, den Legacy-TDD-Funkrahmen ersetzt und eine vordefinierte Unterrahmenauswahl für Legacy-Übertragungszeitintervall-,TTI-,Unterrahmenübertragungen mit einer Länge von 1 ms und sTTI-Unterrahmenübertragungen mit einer kürzeren Länge als 1 ms spezifiziert; und
Bestimmen mindestens eines Parameters, der einen Suchraum für Legacy-Freigaben, einen Suchraum für sTTI-Freigaben, sTTI-Uplink-Übertragungszeitvorgabe und/oder Zeitvorgabe für hybride automatische Downlink-Wiederholungsanforderung, HARQ, umfasst.

## Revendications

1. Procédé de fonctionnement d'un nœud de réseau (14) dans un réseau de communication cellulaire (10), comprenant :
la signalisation (100, 202), à un dispositif sans fil (12) à intervalle de temps de transmission court, sTTI, d'une indication d'un ensemble de sous-trames de duplexage par répartition dans le temps, TDD, à utiliser, dans lequel l'ensemble de sous-trames TDD signalé à utiliser présente une longueur d'une trame radio TDD patrimoniale de 10 millisecondes utilisée par des dispositifs sans fil patrimoniaux, remplace ladite trame radio TDD patrimoniale et spécifie une sélection de sous-trame prédéfinie pour des transmissions de sous-trames d'intervalle de temps de transmission, TTI, patrimoniales d'une longueur de 1 ms et des transmissions de sous-trames sTTI d'une longueur inférieure à 1 ms.

2. Procédé selon la revendication 1, dans lequel l'ensemble de sous-trames TDD est l'un parmi une pluralité d'ensembles de sous-trames TDD prédéfinis qui sont définis pour une configuration de liaison descendante/liaison montante TDD configurée pour une cellule respective.

3. Procédé selon la revendication 2, dans lequel la pluralité d'ensembles de sous-trames TDD prédéfinis spécifient des séquences de sous-trames d'une pluralité de types de sous-trames TDD, la pluralité de types de sous-trames TDD comprenant un type de sous-trame de liaison descendante, un type de sous-trame de liaison montante, un type de sous-trame spécial et un ou plusieurs types de sous-trames supplémentaires définis pour des transmissions sTTI.

4. Procédé selon la revendication 3, dans lequel chaque type de sous-trame supplémentaire parmi les un ou plusieurs types de sous-trames supplémentaires présente un motif sTTI fixe défini pour le type de sous-trame supplémentaire, le motif sTTI fixe comprenant un ou plusieurs sTTI de liaison descendante et un ou plusieurs sTTI de liaison montante.

5. Procédé selon l'une quelconque des revendications 1 à 4, dans lequel l'indication de l'ensemble de sous-trames TDD à utiliser est valable pour une trame radio ou une longueur supérieure.

6. Procédé selon l'une quelconque des revendications 1 à 5, dans lequel l'ensemble de sous-trames TDD à utiliser remplace un ensemble de sous-trames TDD préalablement configuré à utiliser.

7. Procédé selon l'une quelconque des revendications 1 à 6, dans lequel la signalisation (100, 202) de l'indication de l'ensemble de sous-trames TDD comprend la signalisation (100, 202) de l'indication de l'ensemble de sous-trames TDD dans l'un parmi une première sous-trame d'une trame radio et un octroi sTTI.

8. Procédé selon l'une quelconque des revendications 1 à 7, dans lequel l'ensemble de sous-trames TDD correspond à une séquence spécifique de sTTI à l'intérieur d'une pluralité correspondante de sous-trames TDD.

9. Procédé selon l'une quelconque des revendications 1 à 8, comprenant en outre la détermination (200) de l'ensemble de sous-trames TDD à utiliser sur la base d'au moins un critère dans le groupe se composant de : un rapport de dispositifs sans fil patrimoniaux et de dispositifs sans fil sTTI et un rapport de trafic de liaison descendante et de liaison montante de dispositifs sans fil patrimoniaux.

10. Nœud de réseau (14) pour un réseau de communication cellulaire (10), comprenant :
un processeur (30, 50) ; et
une mémoire (32, 52) comprenant des instructions exécutables par le processeur (30, 50) de telle manière que le nœud de réseau (14) soit exploitable pour :
signaler, à un dispositif sans fil (12) à intervalle de temps de transmission court, sTTI, une indication d'un ensemble de sous-trames de duplexage par répartition dans le temps, TDD, à utiliser, dans lequel l'ensemble de sous-trames TDD signalé à utiliser présente une longueur d'une trame radio TDD patrimoniale de 10 millisecondes utilisée par des dispositifs sans fil patrimoniaux, remplace ladite trame radio TDD patrimoniale et spécifie une sélection de sous-trame prédéfinie pour des transmissions de sous-trames d'intervalle de temps de transmission, TTI, patrimoniales d'une longueur de 1 ms et des transmissions de sous-trames sTTI d'une longueur inférieure à 1 ms.

11. Procédé de fonctionnement d'un dispositif sans fil (12) à intervalle de temps de transmission court, sTTI, dans un réseau de communication cellulaire (10), comprenant :
la réception (102, 202), depuis un nœud de réseau (14), d'une indication d'un ensemble de sous-trames de duplexage par répartition dans le temps, TDD, à utiliser, dans lequel l'ensemble de sous-trames TDD à utiliser présente une longueur d'une trame radio TDD patrimoniale de 10 millisecondes utilisée par des dispositifs sans fil patrimoniaux, remplace ladite trame radio TDD patrimoniale et spécifie une sélection de sous-trame prédéfinie pour des transmissions de sous-trames d'intervalle de temps de transmission, TTI, patrimoniales d'une longueur de 1 ms et des transmissions de sous-trames sTTI d'une longueur inférieure à 1 ms ; et
la détermination (104-106, 208) d'au moins un paramètre comprenant un espace de recherche pour des octrois patrimoniaux, un espace de recherche pour des octrois sTTI, un timing de transmission de liaison montante sTTI, et/ou un timing de demande de répétition automatique hybride, HARQ, de liaison descendante.

12. Procédé selon la revendication 11, dans lequel l'indication de l'ensemble de sous-trames TDD à utiliser est un identifiant d'ensemble de sous-trames TDD, et la détermination (104, 208) de l'au moins un paramètre comprend :
la combinaison (104) de l'identifiant d'ensemble de sous-trames TDD et d'un identifiant de configuration de liaison descendante/liaison montante TDD pour une configuration de liaison descendante/liaison montante TDD utilisée pour une cellule respective pour obtenir de ce fait un indice de rangée dans une table d'ensembles de sous-trames TDD pour la configuration de liaison descendante/liaison montante TDD utilisée ; et
le réglage (106) du timing de transmission de liaison montante sTTI et du timing HARQ de liaison descendante sur la base de l'indice de rangée.

13. Procédé selon la revendication 11, dans lequel l'au moins un paramètre comprend l'un parmi : un espace de recherche pour des octrois patrimoniaux et un espace de recherche pour des octrois sTTI ; un timing de transmission de liaison montante sTTI ; et un timing HARQ de liaison descendante.

14. Procédé selon l'une quelconque des revendications 11 à 13, dans lequel la réception (102, 202) de l'indication de l'ensemble de sous-trames TDD comprend la réception (102, 202) de l'indication de l'ensemble de sous-trames TDD dans l'un parmi une première sous-trame d'une trame radio et un octroi sTTI.

15. Dispositif sans fil (12) à intervalle de temps de transmission court, sTTI, pour un réseau de communication cellulaire (10), comprenant :
un émetteur-récepteur (24) ;
un processeur (20) ; et
une mémoire (22) comprenant des instructions exécutables par le processeur (20) de telle manière que le dispositif sans fil (12) soit exploitable pour :
recevoir, depuis un nœud de réseau (14), une indication d'un ensemble de sous-trames de duplexage par répartition dans le temps, TDD, à utiliser, dans lequel l'ensemble de sous-trames TDD à utiliser présente une longueur d'une trame radio TDD patrimoniale de 10 millisecondes utilisée par des dispositifs sans fil patrimoniaux, remplace ladite trame radio TDD patrimoniale et spécifie une sélection de sous-trame prédéfinie pour des transmissions de sous-trames d'intervalle de temps de transmission, TTI, patrimoniales d'une longueur de 1 ms et des transmissions de sous-trames sTTI d'une longueur inférieure à 1 ms ; et
déterminer au moins un paramètre comprenant un espace de recherche pour des octrois patrimoniaux, un espace de recherche pour des octrois sTTI, un timing de transmission de liaison montante sTTI, et/ou un timing de demande de répétition automatique hybride, HARQ, de liaison descendante.
